# FASCICULE DE BREVET EUROPEEN

(11) **EP 3 717 219 B1**
(45) Date de publication et mention de la délivrance du brevet: **13.11.2024**
(21) Numéro de dépôt: 18816253.1
(22) Date de dépôt: 27.11.2018
(51) Int. Cl.: B29D 30/06

(54) **ELEMENT MOULANT COMPORTANT UNE STRUCTURE RIGIDIFIANTE**
FORMTEIL MIT EINER VERSTEIFUNGSSTRUKTUR
MOULDING ELEMENT COMPRISING A STIFFENING STRUCTURE

(30) Priorité: 30.11.2017 FR 1771285
(43) Date de publication de la demande: 07.10.2020
(73) Titulaire: Compagnie Générale des Etablissements Michelin, 63000 Clermont-Ferrand (FR)
(72) Inventeur: CALVEL, Romain, 63040 Clermont-Ferrand Cedex 09 (FR); TREILHES, Alexis, 63040 Clermont-Ferrand Cedex 09 (FR); MUHLHOFF, Olivier, 63040 Clermont-Ferrand Cedex 09 (FR); BLANCHET, Etienne, 63040 Clermont-Ferrand Cedex 09 (FR); GOUMAULT, Pascal, 63040 Clermont-Ferrand Cedex 09 (FR); MASSIS, Frédéric, 63040 Clermont-Ferrand Cedex 09 (FR); JAQUET, Hélène, 63040 Clermont-Ferrand Cedex 09 (FR)
(74) Mandataire: M.F.P. Michelin
(86) Numéro de dépôt international: PCT/IB2018/059359
(87) Numéro de publication internationale: WO 2019/106537

(56) Documents cités:
- EP-A1- 1 782 970
- WO-A1-2016/003435
- WO-A1-2017/058226
- JP-A- H 031 910
- US-A1- 2006 027 295

## Description

### DOMAINE TECHNIQUE DE L'INVENTION

La présente invention concerne un élément moulant pour le moulage d'une découpure dans une bande de roulement d'un pneumatique. L'invention concerne également un ensemble d'éléments moulants formant un réseau d'éléments moulants dans un moule.

### ÉTAT DE LA TECHNIQUE ANTERIEURE

On connait le document FR2961741 décrit une lamelle pour une garniture d'un moule destiné à la vulcanisation d'une bande de roulement d'un pneumatique, ladite lamelle étant fabriquée par fusion sélective par laser. La lamelle comprend une partie d'ancrage configurée pour ancrer la lamelle dans un corps de la garniture, une partie de moulage configurée pour mouler au moins une découpure dans la bande de roulement du pneumatique. La lamelle comprend en outre des moyens de renfort entièrement présents au niveau de la partie d'ancrage de ladite lamelle. Le renfort décrit dans ce document étant entièrement enchâssé dans la zone d'ancrage ne procure aucun effet sur la zone de moulage. Les renforts permettent d'éviter les déformations de la lamelle au cours de sa fabrication par fabrication additive. Pour éviter d'impacter les propriétés du pneumatique, l'élément de renfort est complètement enchâssé dans le corps du moule.

Cependant, il y a une tendance à prévoir dans la lamelle des zones amincies. Il existe donc un besoin de prévoir spécifiquement une solution pour un maintien mécanique de ces zones amincies, notamment lors de l'utilisation de ces lamelles lors du moulage/démoulage du pneumatique.

Le document EP1782970 décrit une lamelle pour moule de pneumatique comportant des faces avec une structure en trois dimensions. Cette structure est toutefois formée par une paroi d'épaisseur constante.

Le document WO2017058226 décrit des lamelles pour moule de pneumatique comportant une portion amincie unique entourée par une portion d'épaisseur plus importante.

Le document WO2016003435 décrit des lamelles pour moule de pneumatique dont l'épaisseur varie depuis la base vers l'extrémité libre de la lamelle.

Le document JP03001910 décrit des lamelles pour moule de pneumatique formées par deux plaques juxtaposées l'une contre l'autre. Les plaques comportent des ondulations, prévues pour former des rainures sur les parois correspondantes du pneumatique à mouler.

### DÉFINITIONS

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une découpure fine également appelée incision, soit une découpure large également appelée rainure.

Par « élément moulant », on entend un élément disposé dans un moule apte à réaliser des découpures dans la bande de roulement d'un pneumatique. Un élément moulant apte à réaliser une incision dans la bande de roulement est appelé une lamelle. Un élément moulant apte à réaliser une rainure dans la bande de roulement est appelé un cordon.

### EXPOSE DE L'INVENTION

Tout d'abord, un premier objectif de l'invention consiste à prévoir un élément moulant permettant d'assurer la tenue mécanique au moment du moulage et/ou du démoulage.

Un deuxième objectif de l'invention consiste à prévoir un moyen permettant de mettre en oeuvre des éléments moulants très minces, sans risque de rupture ou dommage.

Pour ce faire, l'invention prévoit un élément moulant selon l'objet de la revendication 1.

Les éléments moulants présentant ces caractéristiques offrent une meilleure tenue mécanique lors des phases de démoulage des pneumatiques réalisés avec des moules utilisant de tels éléments moulants. Les réseaux de surépaisseur forment une structure renforçante particulièrement efficace à cet égard. Les réseaux encadrent des zones amincies afin de rigidifier ces zones.

De manière avantageuse, le réseau d'élément en protubérance est mis en oeuvre des deux côtés de l'élément moulant.

La présence d'un double réseau contribue à optimiser la résistance des lamelles au démoulage. En fonction des modes de réalisation, les réseaux de part et d'autre de l'élément moulant sont identiques ou distincts.

Selon diverses variantes de réalisation, le réseau d'éléments en protubérance est symétrique ou non symétrique des deux côtés de l'élément moulant.

Selon un autre mode de réalisation avantageux, le réseau d'éléments en protubérance est en forme de nid d'abeille.

Selon encore diverses variantes de réalisation, le réseau d'éléments en protubérance comprend une pluralité de carrés, et/ou une pluralité de cercles, et/ou une pluralité de triangles et/ou d'autres formes géométriques.

**De** manière avantageuse, au moins une protubérance comporte une épaisseur variable et la liaison entre la zone amincie et la portion éloignée de la protubérance est progressive.

Selon un mode de réalisation avantageux, l'élément moulant est une lamelle.

L'invention prévoit également un moule pour la vulcanisation d'une bande de roulement d'un pneumatique, comportant une pluralité d'éléments moulants tels que préalablement décrits.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- les figures 1 et 2 sont des représentations schématiques d'un élément moulant comportant un réseau de rigidification en forme de nid d'abeille ;
- la figure 3 est une représentation schématique d'un élément moulant comportant un réseau de rigidification comportant une pluralité de carrés;
- la figure 4 est une représentation schématique d'un élément moulant comportant un réseau de rigidification comportant une pluralité de cercles;
- la figure 5 est une représentation schématique d'un élément moulant comportant un réseau de rigidification comportant une pluralité de triangles;
- la figure 6 est une représentation schématique d'un élément moulant comportant un réseau de rigidification en forme de nid d'abeille multicellulaire ;
- les figures 7a et 7b sont des représentations schématiques d'éléments moulants comportant une ou plusieurs surépaisseurs progressives.

Dans la description qui va suivre, des éléments sensiblement identiques ou similaires seront désignés par des références identiques.

### DESCRIPTION DETAILLEE DE L'INVENTION

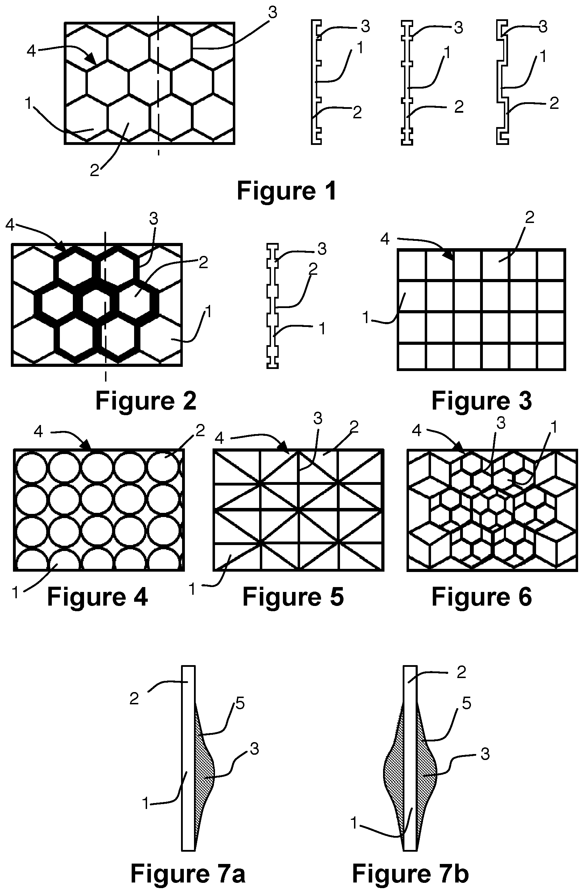

La figure 1 présente un élément moulant 1 pour le moulage d'une découpure dans une bande de roulement d'un pneumatique. Cet élément moulant 1 a la forme d'une lamelle et comporte au moins une portion amincie 2. La portion amincie a une épaisseur inférieure ou égale à 0,35 mm.

Une pluralité d'éléments 3 en protubérance sont agencés le long de la portion amincie 2 et coopèrent entre eux pour constituer un réseau 4 d'éléments en protubérance.

Les agencements réalisables grâce au cheminement des éléments 3 en protubérance sur les zones amincies 2 sont pratiquement illimités. A titre d'exemples, les figures 1 à 6 présentent quelques types d'agencements géométriques réalisables. Dans les exemples des figures 1, 2 et 6, des structures en nid d'abeille sont constituées. Ces types d'agencements procurent un niveau de rigidité et de solidité particulièrement élevés. Dans l'exemple de la figure 1, les éléments 3 en protubérance sont de largeur sensiblement identique, tandis que dans l'exemple de la figure 2, certains éléments 3 en protubérance ont une largeur plus importante que d'autres. Plusieurs niveaux de largeurs sont possibles.

Le réseau 4 illustré dans l'exemple de réalisation de la figure 6 comprend une structure en forme de nid d'abeille constitué de cellules de grande surface, elles-mêmes subdivisés en sous-cellules de surface inférieure. Une telle structure, avec imbrication de petites cellules dans des cellules plus grandes, procure un niveau de rigidité et de solidité notablement élevés.

Les figures 3, 4 et 5 illustrent d'autres exemples d'agencements de réseaux 4. Dans l'exemple de la figure 3, le réseau est constitué par une pluralité de carrés. Dans l'exemple de la figure 4, le réseau est constitué par une pluralité de cercles. Enfin, dans l'exemple de la figure 5, le réseau est constitué par une pluralité de triangles. Dans les exemples précédents, les surfaces des carrés et/ou des cercles et/ou des triangles peuvent être identiques ou non. Par ailleurs, dans l'exemple de la figure 5, chacun des triangles est généré par séparation en deux parties égales d'un carré. Les triangles sont agencés en alternance, de sorte qu'un bloc de quatre carrés ou de huit carrés (ou plus, selon la dimension de l'élément moulant et les surfaces des triangles) comporte des diagonales formant des triangles de plus grande dimension, faisant également partie du réseau 4 d'éléments en protubérance. Une telle structure procure un niveau de rigidité et de solidité particulièrement élevés.

### ELEMENTS EN PROTUBERANCE SUR UN OU DEUX CÔTÉS

L'exemple de réalisation de la figure 1 présente plusieurs types de profils, à savoir un premier profil (au centre de la figure) dans lequel les éléments 3 en protubérance sont prévus d'un seul côté de l'élément moulant 1, et deux autres profils (à droite de la figure), où les éléments 3 en protubérance sont prévus des deux côtés de l'élément moulant 1.

Une disposition des éléments 3 en protubérance des deux côtés de l'élément moulant 1 permet de diminuer encore le niveau de fragilité de l'élément moulant.

### ELEMENTS EN PROTUBERANCE SYMETRIQUES OU NON

Les exemples de profils présentés à la figure 1 montrent également que le réseau 4 d'éléments en protubérance peut être symétrique des deux côtés de l'élément moulant ou non symétrique (profil à l'extrême droite de la figure 1). Tel qu'illustré à la figure 1 avec le profil à l'extrême droite de la figure, les portions amincies 2 peuvent être dans des plans distincts, ces plans étant espacés par des éléments 3 en protubérance assurant la jonction entre deux plans voisins.

### RIGIDIFICATION ET AMINCISSEMENT

Tel qu'illustré aux différents exemples de réalisation des figures 1 à 6, les éléments 3 en protubérance se rejoignent sur au moins une des deux faces des éléments moulants pour former un réseau 4 d'éléments en protubérance. Ce réseau encadre les zones amincies 2, permet de les rigidifier et d'assurer une bonne tenue mécanique. Les réseaux 4 sont avantageusement organisés pour assurer une protection mécanique de l'ensemble des surfaces actives des éléments moulant, pour éviter toute dégradation, notamment lors des phases de moulage et de démoulage des pneumatiques. La phase de démoulage est une phase où les éléments moulants sont particulièrement sollicités mécaniquement. Chacun des éléments moulants 1 se retrouve imbriqué dans la bande de roulement. Du fait de la forme annulaire de la bande de roulement, inhérente au pneumatique, les efforts liés au démoulage ne sont pas toujours exercés dans la direction radiale, et peuvent être exercés dans de nombreuses directions, et peuvent souvent atteindre des niveaux relativement élevés. Les structures en réseaux préalablement décrites permettent de réaliser des éléments moulants pourvus de zones amincies particulièrement fines, par exemple d'épaisseur inférieure ou égale à 0,35 mm, sans risque de détérioration de ces zones, que ce soit par cassure ou craquelure.

Pour une lamelle pourvue d'une pluralité de zones amincies, l'épaisseur peut varier d'une zone à une autre pour au moins deux zones, voisines ou à distance l'une de l'autre. Les surfaces des zones amincies peuvent aussi varier d'une zone à une autre, pour au moins deux zones, voisines ou à distance l'une de l'autre. Par ailleurs, un élément moulant peut comporter au moins deux protubérances avec des largeurs différentes et/ou des hauteurs différentes.

Les variantes de réalisation des figures 7a et 7b montrent que les éléments 3 en protubérance peuvent également être configurés avec des épaisseurs variables, avec une liaison progressive 5 entre la zone mince et le sommet de la protubérance. Dans ces exemples, l'épaisseur varie de façon progressive, par exemple en forme de courbe de Gauss. Cette caractéristique, avec un profil progressivement arrondi, permet d'éviter les zones angulaires. La protubérance peut se trouver d'un côté de l'élément moulant (figure 7a) ou des deux côtés (figure 7b), de façon symétrique ou non symétrique.

Les éléments moulants sont fabriqués par frittage laser. En variante, ces éléments moulants sont fabriqués par tout autre procédé de fabrication, tel que la fonderie, l'usinage, l'usinage chimique, électroformage, etc.

### Numéros de référence employés sur les figures

- 1: Elément moulant
- 2: Portion amincie
- 3: Eléments en protubérance
- 4: Réseau d'éléments en protubérance
- 5: Liaison progressive

## Revendications

1. Elément moulant (1) destiné à être rapporté dans un moule pour la vulcanisation d'une bande de roulement d'un pneumatique, comportant une pluralité de portions amincies (2) d'épaisseur inférieure ou égale à 0,35 mm et une pluralité d'éléments (3) en protubérance par rapport à au moins une des faces de la zone amincie, **caractérisé en ce que** les éléments (3) en protubérance se rejoignent sur ladite face pour former un réseau (4) de surépaisseurs créant une structure renforçante encadrant les portions amincies (2) afin de les rigidifier.

2. Elément moulant selon la revendication 1, dans lequel le réseau (4) d'éléments en protubérance est mis en oeuvre des deux côtés de l'élément moulant.

3. Elément moulant selon l'une quelconque des revendications 1 ou 2, dans lequel le réseau (4) d'éléments en protubérance est symétrique des deux côtés de l'élément moulant.

4. Elément moulant selon l'une quelconque des revendications 1 ou 2, dans lequel le réseau (4) d'éléments en protubérance est non symétrique des deux côtés de l'élément moulant.

5. Elément moulant selon l'une quelconque des revendications 1 à 4, dans lequel le réseau (4) d'éléments en protubérance est en forme de nid d'abeille.

6. Elément moulant selon l'une quelconque des revendications 1 à 4, dans lequel le réseau (4) d'éléments en protubérance comprend une pluralité de carrés.

7. Elément moulant selon l'une quelconque des revendications 1 à 4, dans lequel le réseau (4) d'éléments en protubérance comprend une pluralité de cercles.

8. Elément moulant selon l'une quelconque des revendications 1 à 4, dans lequel le réseau (4) d'éléments en protubérance comprend une pluralité de triangles.

9. Elément moulant selon l'une quelconque des revendications précédentes, dans lequel au moins une protubérance (3) comporte une épaisseur variable et la liaison (5) entre la zone amincie (2) et la portion éloignée de la protubérance est progressive.

10. Elément moulant selon l'une quelconque des revendications précédentes, dans lequel l'élément moulant (1) est une lamelle.

11. Moule pour la vulcanisation d'une bande de roulement d'un pneumatique, comportant une pluralité d'éléments moulants (1) selon l'une quelconque des revendications 1 à 10.

## Patentansprüche

1. Formteil (1), das dazu bestimmt ist, in eine Form zum Vulkanisieren eines Laufstreifens eines Reifens gesetzt zu werden, umfassend eine Vielzahl von verdünnten Abschnitten (2) mit einer Dicke kleiner oder gleich 0,35 mm und eine Vielzahl von in Bezug auf mindestens eine der Seiten des verdünnten Bereichs vorspringenden Elementen (3), **dadurch gekennzeichnet, dass** die vorspringenden Elemente (3) auf der Seite aneinanderstoßen, um ein Gitter (4) aus Überdicken zu bilden, das eine verstärkende Struktur erzeugt, die die verdünnten Abschnitte (2) umrahmt, um sie auszusteifen.

2. Formteil nach Anspruch 1, wobei das Gitter (4) aus vorspringenden Elementen auf den beiden Seiten des Formteils ausgeführt ist.

3. Formteil nach einem der Ansprüche 1 oder 2, wobei das Gitter (4) aus vorspringenden Elementen auf den beiden Seiten des Formteils symmetrisch ist.

4. Formteil nach einem der Ansprüche 1 oder 2, wobei das Gitter (4) aus vorspringenden Elementen auf den beiden Seiten des Formteils nicht symmetrisch ist.

5. Formteil nach einem der Ansprüche 1 bis 4, wobei das Gitter (4) aus vorspringenden Elementen wabenförmig ist.

6. Formteil nach einem der Ansprüche 1 bis 4, wobei das Gitter (4) aus vorspringenden Elementen eine Vielzahl von Quadraten umfasst.

7. Formteil nach einem der Ansprüche 1 bis 4, wobei das Gitter (4) aus vorspringenden Elementen eine Vielzahl von Kreisen umfasst.

8. Formteil nach einem der Ansprüche 1 bis 4, wobei das Gitter (4) aus vorspringenden Elementen eine Vielzahl von Dreiecken umfasst.

9. Formteil nach einem der vorhergehenden Ansprüche, wobei mindestens ein Vorsprung (3) eine variable Dicke umfasst und der Übergang (5) zwischen dem verdünnten Bereich (2) und dem entfernten Abschnitt des Vorsprungs progressiv ist.

10. Formteil nach einem der vorhergehenden Ansprüche, wobei das Formteil (1) eine Lamelle ist.

11. Form zum Vulkanisieren eines Laufstreifens eines Reifens, umfassend eine Vielzahl von Formteilen (1) nach einem der Ansprüche 1 bis 10.

## Claims

1. Moulding element (1) intended to be added into a mould for the vulcanization of a tread of a tyre, comprising a plurality of thinner zones (2) of a thickness less than or equal to 0.35 mm and a plurality of elements (3) protruding relative to at least one of the faces of the thinner zone, **characterized in that** the protruding elements (3) meet on said face to form a network (4) of protruding elements forming a reinforcing structure networks enclosing thinner zones (2) in order to stiffen these zones.

2. Moulding element according to Claim 1, wherein the network (4) of protruding elements is implemented on both sides of the moulding element.

3. Moulding element according to either one of Claims 1 and 2, wherein the network (4) of protruding elements is symmetrical on both sides of the moulding element.

4. Moulding element according to either one of Claims 1 and 2, wherein the network (4) of protruding elements is non-symmetrical on both sides of the moulding element.

5. Moulding element according to any one of Claims 1 to 4, wherein the network (4) of protruding elements is in honeycomb form.

6. Moulding element according to any one of Claims 1 to 4, wherein the network (4) of protruding elements comprises a plurality of squares.

7. Moulding element according to any one of Claims 1 to 4, wherein the network (4) of protruding elements comprises a plurality of circles.

8. Moulding element according to any one of Claims 1 to 4, wherein the network (4) of protruding elements comprises a plurality of triangles.

9. Moulding element according to any one of the preceding claims, wherein at least one protuberance (3) has a variable thickness and the link (5) between the thinner zone (2) and the distant portion of the protuberance is progressive.

10. Moulding element according to any one of the preceding claims, wherein the moulding element (1) is a blade.

11. Mould for the vulcanization of a tread of a tyre, comprising a plurality of moulding elements (1) according to any one of Claims 1 to 10.
